(19) Europäisches Patentamt
European Patent Office
Office européen des brevets

(11) **EP 2 471 040 B1**

## (12) EUROPÄISCHE PATENTSCHRIFT

(45) Veröffentlichungstag und Bekanntmachung des Hinweises auf die Patenterteilung:
**16.12.2015 Patentblatt 2015/51**

(21) Anmeldenummer: **10744942.3**

(22) Anmeldetag: **23.08.2010**

(51) Int Cl.:
*G06T 3/40* (2006.01)        *G06T 7/00* (2006.01)
*G06K 9/32* (2006.01)

(86) Internationale Anmeldenummer:
**PCT/EP2010/062251**

(87) Internationale Veröffentlichungsnummer:
**WO 2011/023657 (03.03.2011 Gazette 2011/09)**

(54) **VERFAHREN UND VORRICHTUNG ZUM ZUSAMMENFÜGEN VON MEHREREN DIGITALEN EINZELBILDERN ZU EINEM GESAMTBILD**

METHOD AND DEVICE FOR JOINING A PLURALITY OF INDIVIDUAL DIGITAL IMAGES INTO A TOTAL IMAGE

PROCÉDÉ ET DISPOSITIF POUR ASSEMBLER PLUSIEURS IMAGES INDIVIDUELLES NUMÉRIQUES EN UNE IMAGE D'ENSEMBLE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **28.08.2009 DE 102009039251**

(43) Veröffentlichungstag der Anmeldung:
**04.07.2012 Patentblatt 2012/27**

(73) Patentinhaber:
• **Fraunhofer-Gesellschaft zur Förderung der angewandten Forschung e.V.**
**80686 München (DE)**
• **Friedrich-Alexander-Universität Erlangen-Nürnberg**
**91054 Erlangen (DE)**

(72) Erfinder:
• **MÜNZENMAYER, Christian**
**90409 Nürnberg (DE)**
• **WINTER, Christian**
**91080 Uttenreuth (DE)**
• **WITTENBERG, Thomas**
**91054 Erlangen (DE)**
• **RUPP, Stephan**
**90765 Fürth (DE)**

• **PAULUS, Dietrich**
**91074 Herzogenaurach (DE)**
• **BERGEN, Tobias**
**91052 Erlangen (DE)**
• **RUTHOTTO, Steffen**
**90491 Nürnberg (DE)**

(74) Vertreter: **Rau, Schneck & Hübner Patentanwälte Rechtsanwälte PartGmbB Königstraße 2 90402 Nürnberg (DE)**

(56) Entgegenhaltungen:
• BEHRENS, A.: "Creating Panoramic Images for Bladder Fluorescence Endoscopy" ACTA POLYTECHNICA, Bd. 48, Nr. 3, 2008, Seiten 50-54, XP007915591
• WOLBERG G ET AL: "Image Registration Using Log-Polar Mappings for Recovery of Large-Scale Similarity and Projective Transformations" IEEE TRANSACTIONS ON IMAGE PROCESSING, IEEE SERVICE CENTER, PISCATAWAY, NJ, US LNKD-DOI:10.1109/TIP.2005.854501, Bd. 14, Nr. 10, 1. Oktober 2005 (2005-10-01), Seiten 1422-1434, XP011139126 ISSN: 1057-7149

**Beschreibung**

Die Erfindung betrifft ein Verfahren und eine Vorrichtung zum Zusammenfügen von mehreren digitalen Einzelbildern zu einem Gesamtbild.

Endoskopsysteme werden zum Inspizieren schwer zugänglicher Hohlräume im industriellen und medizinischen Bereich eingesetzt. Das eingeschränkte Blickfeld von Endoskopsystemen erschwert die Orientierung sowie die Koordination beim Inspizieren der Hohlräume, wodurch der gesamte Inspiziervorgang deutlich komplexer und zeitaufwändiger wird. Um das Blickfeld von Endoskopsystemen zu erweitern, wurden Verfahren entwickelt, die aus einer Folge von endoskopisch aufgenommenen, digitalen Einzelbildern ein Gesamtbild erzeugen. Das Zusammenfügen wird auch als Stitching oder Mosaicking bezeichnet. Durch das zusammengefügte Gesamtbild, das auch als Bildmosaik bezeichnet wird, wird das Blickfeld des Endoskopsystems künstlich erweitert.

Aus dem Fachartikel "Real-Time Image Mosaic for Endoscopic Video Sequences" von Konen et al., veröffentlicht in "Bildverarbeitung für die Medizin", 2007, ist ein echtzeitfähiges Verfahren zum Zusammenfügen von endoskopisch aufgenommenen Einzelbildern zu einem Bildmosaik bekannt, das auf einer Berechnung des optischen Flusses basiert. Als optischer Fluss wird ein Vektorfeld bezeichnet, das zwischen je zwei Einzelbildern für jedes Pixel die Bewegungsrichtung und -geschwindigkeit angibt. Hierbei wird angenommen, dass sich zwischen den Einzelbildern die Pixelwerte nicht verändern, sondern lediglich verschieben. Nachteilig bei diesem Verfahren ist, dass die Berechnung des optischen Flusses aufwändig ist.

Aus dem Fachartikel "Creating Panoramic Images for Bladder Fluorescence Endoscopy" von Alexander Behrens, veröffentlicht in Acta Polytechnica, Vol. 48, No. 3/2008, ist ein Verfahren zum Zusammenfügen von mehreren mit einem Endoskopsystem aufgenommenen Bildern bekannt. In den Bildern werden mittels des SIFT-Algorithmus Merkmale verfolgt. Anschließend wird ausgehend von den verfolgten Merkmalen mittels des RANSAC-Algorithmus eine affine Transformationsmatrix berechnet.

Aus dem Fachartikel "Image Registration Using Log-Polar Mappings for Recovery of Large-Scale Similarity and Projective Transformations" von George Wolberg et al., veröffentlicht in IEEE Transactions on Image Processing, Vol. 14, No. 10, 2005, ist ein Verfahren zur Registrierung von Bildern durch Berechnung einer projektiven Transformationsmatrix bekannt. Die Registrierung erfolgt anhand einer Auflösungspyramide.

Der Erfindung liegt die Aufgabe zugrunde, ein Verfahren zum Zusammenfügen von mehreren digitalen Einzelbildern zu einem Gesamtbild zu schaffen, das schnell, insbesondere echtzeitfähig, und genau ist.

Diese Aufgabe wird durch ein Verfahren mit den Merkmalen des Anspruchs 1 gelöst. Das erfindungsgemäße Verfahren basiert auf einem merkmalsbasierten Algorithmus, mit dem in dem ersten Einzelbild mehrere Merkmale bestimmt und diese Merkmale in dem zweiten Einzelbild erneut bestimmt bzw. verfolgt werden. Das Verfolgen der in dem ersten Einzelbild bestimmten Merkmale wird auch als Tracking bezeichnet. Als merkmalsbasierter Algorithmus können beispielsweise der KLT-Algorithmus, der Harris-Corner-Detektor, der Monotonie-Operator, der SIFT-Algorithmus (Scale Invariant Feature Transform) oder der SURF-Algorithmus (Speeded Up Robust Features) dienen.

Aus den bestimmten und verfolgten Merkmalen wird eine Transformationsmatrix berechnet, die zum Zusammenfügen der Einzelbilder zu dem Gesamtbild dient. Die Transformationsmatrix weist mindestens sechs Freiheitsgrade auf und ist beispielsweise eine affine Transformationsmatrix mit genau sechs Freiheitsgraden oder eine projektive Transformationsmatrix mit genau acht Freiheitsgraden. Aus der Menge der bestimmten Merkmalskorrespondenzen, also den ersten und zugehörigen zweiten Merkmalskoordinaten zu den Merkmalen $M_1$ bis $M_n$ wird die Transformationsmatrix berechnet, die die beiden Einzelbilder ineinander überführt. Die Gesamtmenge der Merkmalskorrespondenzen wird mit

$$A = \left\{ \left( \mathbf{p}_1^a, \mathbf{p}_1^b \right), \left( \mathbf{p}_2^a, \mathbf{p}_2^b \right), \ldots, \left( \mathbf{p}_n^a, \mathbf{p}_n^b \right) \right\} \qquad (1)$$

bezeichnet, wobei

$\mathbf{p}_n^a$      die ersten Merkmalskoordinaten des Merkmals $M_n$ und

$\mathbf{p}_n^b$      die zugehörigen zweiten Merkmalskoordinaten des Merkmals $M_n$ sind.

Wenn die zu Grunde liegende Transformation die perspektivische Transformation ist, gilt

$$\mathbf{p}^a = \mathbf{H}_{b,a}\, \mathbf{p}^b \qquad (2)$$

wobei

$H_{b,a}$     eine Transformationsmatrix mit acht Freiheitsgraden ist, die die Punkte $\mathbf{p}^a = (x^a, y^a, 1)^T$ und $\mathbf{p}^b = (x^b, y^b, 1)^T$ miteinander verbindet.

Ausschreiben der Elemente der Matrix **H** ergibt

$$\begin{pmatrix} x^a \\ y^a \\ 1 \end{pmatrix} = \begin{pmatrix} h_{11} & h_{12} & h_{13} \\ h_{21} & h_{22} & h_{23} \\ h_{31} & h_{32} & h_{33} \end{pmatrix} \begin{pmatrix} x^b \\ y^b \\ 1 \end{pmatrix} \tag{3}$$

und die Koordinaten berechnen sich als

$$x^a = \frac{h_{11}x^b + h_{12}y^b + h_{13}}{h_{31}x^b + h_{32}y^b + h_{33}} \tag{4}$$

und

$$y^a = \frac{h_{21}x^b + h_{22}y^b + h_{23}}{h_{31}x^b + h_{32}y^b + h_{33}} \tag{5}$$

Einfaches Umformen dieser Gleichungen führt zu

$$h_{11}x^b + h_{12}y^b + h_{13} - h_{31}x^bx^a - h_{32}y^bx^a - h_{33}x^a = 0 \tag{6}$$

und

$$h_{21}x^b + h_{22}y^b + h_{23} - h_{31}x^by^a - h_{32}y^by^a - h_{33}y^a = 0 \tag{7}$$

Jede Merkmalskorrespondenz liefert zwei homogene Gleichungen dieser Art, um die neun Parameter $h_{11}$ ... $h_{33}$ zu bestimmen. Allerdings ist die Matrix $H_{b,a}$ nur bis auf einen beliebigen Skalierungsfaktor eindeutig definiert, weshalb sie acht Freiheitsgrade besitzt. Wenn die homogenen Gleichungen durch das Element $h_{33}$ geteilt werden, bleiben acht Unbekannte, da sich dieses Element herauskürzt. Aus diesem Grund ist eine Menge von vier Merkmalskorrespondenzen ausreichend, um die Transformationsmatrix zwischen zwei Einzelbildern zu bestimmen.

Die Berechnung der Transformationsmatrix kann mittels einer Singulärwertzerlegung durchgerührt werden. Aus den Vektoren

$$\mathbf{h} = (h_{11}, h_{12}, h_{13}, h_{21}, h_{22}, h_{23}, h_{31}, h_{32}, h_{33})^T \tag{8}$$

$$\boldsymbol{\alpha}_i = (x_i^b, y_i^b, 1, 0, 0, 0, -x_i^b x_i^a, -y_i^b x_i^a, -x_i^a)^T \tag{9}$$

$$\boldsymbol{\beta}_i = (0, 0, 0, x_i^b, y_i^b, 1, -x_i^b y_i^a, -y_i^b y_i^a, -y_i^a)^T \tag{10}$$

können die homogenen Gleichungen als

$$\boldsymbol{\alpha}_i^T \mathbf{h} = 0 \tag{11}$$

$$\boldsymbol{\beta}_i^{\mathrm{T}}\mathbf{h} = 0 \qquad\qquad (12)$$

geschrieben werden. Aus den n Merkmalskorrespondenzen mit $n \geq 4$ kann nun die Systemmatrix Q für die Singulärwertzerlegung konstruiert werden

$$
\mathbf{Q} = \begin{pmatrix}
\alpha_{11} & \alpha_{12} & \cdots & \alpha_{19} \\
\alpha_{21} & \alpha_{22} & \cdots & \alpha_{29} \\
\vdots & \vdots & \vdots & \vdots \\
\alpha_{n1} & \alpha_{n2} & \cdots & \alpha_{n9} \\
\beta_{11} & \beta_{12} & \vdots & \beta_{19} \\
\beta_{21} & \beta_{22} & \vdots & \beta_{29} \\
\vdots & \vdots & \vdots & \vdots \\
\beta_{n1} & \beta_{n2} & \vdots & \beta_{n9}
\end{pmatrix} \qquad\qquad (13)
$$

und die homogenen Gleichungen aus Gleichung (11) lassen sich schreiben als

$$\mathbf{Q}\,\mathbf{h} = 0 \qquad\qquad (14)$$

Die Lösung dieses Gleichungssystems ist der Nullraum von **Q**. Die Lösung ist eindeutig, wenn in der Menge vier oder mehr Merkmalskorrespondenzen enthalten sind, die nicht kolinear sind. Existieren mehr als vier solcher Korrespondenzen, kann ebenfalls an Hand der Singulärwertzerlegung die Lösung mit den kleinsten Fehlerquadraten berechnet werden. Die Singulärwertzerlegung faktorisiert **Q** in drei Matrizen $\mathbf{Q} = \mathbf{U}\,\Sigma\,\mathbf{V}^{\mathrm{T}}$. Die Diagonalmatrix $\Sigma$ enthält die absteigend sortierten Singulärwerte $\sigma_1 \ldots \sigma_9$. Im Fall einer perfekten Lösung gilt $\sigma_9 = 0$ und $\sigma_i \neq 0$ für $1 \leq i \leq 8$. Im Fall eines überbestinunten Gleichungssystems gilt $\sigma_9 \approx 0$. In beiden Fällen ist der korrespondierende letzte Spaltenvektor von **V** der Lösungsvektor. Dieser Vektor enthält neun Elemente, die die gesuchte Transformationsmatrix ergeben, wenn diese zeilenweise mit den Elementen aufgefüllt wird.

Für das affine Transformationsmodell kann auf entsprechende Weise die Transformationsmatrix bestimmt werden. Da diese Transformationsmatrix nur sechs Freiheitsgrade hat, reicht hier eine Menge von mindestens drei nicht kolinearen Merkmalskorrespondenzen. Es gilt $\sigma_8 = 0$ und $\sigma_9 = 0$ und die korrespondierenden rechtssingulären Vektoren sind die achten bzw. neunten Einheitsvektoren. Im Fall einer perfekten Lösung gilt $\sigma_7 = 0$ und im Fall einer Lösung mit geringsten Fehlerquadraten $\sigma_7 \approx 0$. Die Lösung ist hier der siebte Spaltenvektor aus **V.**

Da der merkmalsbasierte Algorithmus aufgrund seiner Einfachheit, insbesondere bei endoskopisch aufgenommenen Einzelbildern, aufgrund deren schlechter Bildqualität, zu Fehlzuordnungen bei den Merkmalskorrespondenzen, also zu falsch verfolgten Merkmalen, führt, ist eine robuste Berechnung der Transformationsmatrix erforderlich. Hierzu wird der sogenannte RANSAC-Algorithmus (RANdom SAmple Consensus) verwendet, mit dem falsch zugeordnete Merkmalskorrespondenzen bei der Berechnung der Transformationsmatrix unberücksichtigt bleiben. Zunächst wird anhand einer ersten Teilmenge, beispielsweise einer minimalen Teilmenge von erforderlichen Merkmalskorrespondenzen, eine Test-Transformationsmatrix berechnet. Für diese Test-Transformationsmatrix wird nun ein Gütewert, der sogenannte Support, bestimmt. Das bedeutet, es wird ermittelt, ob die Test-Transformationsmatrix für eine zweite Teilmenge der Merkmale, beispielsweise für die restlichen Merkmale, einem vorgegebenen Gütekriterium genügt. Es wird beispielsweise ermittelt, welche Anzahl der Merkmale der zweiten Teilmenge dem Gütekriterium genügt. Die dem Gütekriterium genügenden Merkmale werden als sogenannte Inlier bezeichnet, die anderen Merkmale werden entsprechend als Outlier bezeichnet. Für eine Test-Transformationsmatrix wird eine Merkmalskorrespondenz beispielsweise als Inlier klassifiziert, wenn gilt

$$\left\| \mathbf{p}_i^a - \mathbf{h}\,\mathbf{p}_i^p \right\| \leq t, \tag{15}$$

wobei $\|...\|$ den euklidischen Abstand bezeichnet.

Dieser Vorgang wird solange wiederholt, bis eine Test-Transformationsmatrix mit einem ausreichend hohen Support gefunden oder eine maximale Anzahl an Iterationen durchlaufen wurde. Die endgültige Transformationsmatrix ist dann beispielsweise die beste Test-Transformationsmatrix. Alternativ kann aus den zu der besten Test-Transformationsmatrix vorliegenden Inliern die Transformationsmatrix berechnet werden.

Die Normalisierung der Merkmalskoordinaten erhöht die numerische Stabilität bei der Berechnung der Transformationsmatrix und gewährleistet eine hohe Bildqualität des Gesamtbilds. Zunächst wird aus den Merkmalen der einzelnen Bilder j jeweils der Schwerpunkt berechnet. Der Schwerpunkt $c = (c_x, c_y)$ berechnet sich als

$$\mathbf{c} = \frac{1}{n}\sum_{i=1}^{n}\mathbf{p}_i^j \tag{20}$$

Weiterhin kann für jedes Bild j der mittlere Abstand d zum Schwerpunkt berechnet werden:

$$\mathbf{d} = \frac{1}{n}\sum_{i=1}^{n}\left\| \mathbf{p}_i^j - \mathbf{c} \right\| \tag{21}$$

Ziel ist es, den Koordinatenursprung der berechneten Merkmale aus jedem Einzelbild in den Schwerpunkt zu verschieben und die Merkmale so zu skalieren, dass der Abstand zum Ursprung im Durchschnitt $\sqrt{2}$ beträgt. Dies geschieht durch Multiplikation mit den Normalisierungsmatrizen $\mathbf{N_j}$, die sich wie folgt berechnen:

$$\mathbf{N_j} = \begin{pmatrix} \dfrac{\sqrt{2}}{d} & 0 & \dfrac{-\sqrt{2}c_x}{d} \\[2ex] 0 & \dfrac{\sqrt{2}}{d} & \dfrac{-\sqrt{2}c_y}{d} \\[2ex] 0 & 0 & 1 \end{pmatrix} \tag{22}$$

An Hand der normalisierten Merkmalskoordinaten $\overline{\mathbf{p}}_i^j$ wird nun die normalisierte Transformationsmatrix $\overline{\mathbf{H}}$ berechnet, so dass gilt

$$\overline{\mathbf{p}}_i^a \cong \overline{\mathbf{H}}\,\overline{\mathbf{p}}_i^b \tag{23}$$

Die nicht-normalisierte Transformationsmatrix $\mathbf{H}$ kann nun aus $\overline{H}$ berechnet werden. Es gilt:

$$\mathbf{H} = \mathbf{N}_a^{-1}\,\overline{\mathbf{H}}\,\mathbf{N}_b. \tag{24}$$

Der merkmalsbasierte Algorithmus ermöglicht somit die Erstellung endoskopischer Bildmosaike bzw. eines endoskopischen Gesamtbilds aus Einzelbildern, wobei durch den RANSAC-Algorithmus eine Ausreißer-Erkennung für falsch verfolgte bzw. getrackte Merkmale bereitgestellt wird. Das erfindungsgemäße Verfahren gewährleistet somit aufgrund des merkmalsbasierten Algorithmus ein schnelles und aufgrund des RANSAC-Algorithmus ein genaues Zusammenfügen der Einzelbilder, auch wenn diese nur eine geringe Bildqualität aufweisen, wie dies bei endoskopisch aufgenommenen Einzelbildern der Fall ist. Das erfindungsgemäße Verfahren ist insbesondere echtzeitfähig, wobei unter Echtzeitfähigkeit mindestens zehn zusammengefügte Einzelbilder pro Sekunde bei Verwendung eines handelsüblichen PC verstanden wird.

Zum Zusammenfügen werden insbesondere die x-Koordinate und die y-Koordinate der Pixel des verschobenen Einzelbildes auf den nächsten ganzzahligen Wert gerundet. Hierdurch wird ein schnelles und rechenoptimiertes Zusammenfügen der Einzelbilder gewährleistet. Dies ist insbesondere für das Zusammenfügen in Echtzeit von Bedeutung.

Das Verfahren gewährleistet ein schnelles und genaues Zusammenfügen zu einem Gesamtbild, auch wenn die Einzelbilder eine schlechte Bildqualität aufweisen, insbesondere wenn die Einzelbilder mittels eines Endoskopsystems aufgenommen sind. Mit einem Endoskopsystem aufgenommene Einzelbilder sind durch die eingesetzten Weitwinkellinsen in der Regel verzerrt. Zusätzlich wird die Bildqualität durch die Bewegung des bildgebenden Sensors sowie durch Glanzlichteffekte beeinträchtigt.

Ein Verfahren nach Anspruch 2 ermöglicht ein Bestimmen der Merkmalskoordinaten bei verhältnismäßig großen Verschiebungen zwischen den Einzelbildern. Ausgehend von einer niedrigsten Auflösungsstufe wird ein Merkmal, beispielsweise subpixelgenau, lokalisiert und verfolgt. Das Ergebnis wird in die nächste Auslösungsstufe projiziert, wo das Merkmal erneut bestimmt und verfolgt wird. Die Verschiebungen in Pixeln sind somit pro Auflösungsstufe auf ein bestimmtes Maß begrenzt.

Ein Verfahren nach Anspruch 3 bietet einen guten Kompromiss zwischen Schnelligkeit und Genauigkeit. Bei diesem merkmalsbasierten Algorithmus, der auch als KLT-Algorithmus bezeichnet wird, ist das Bestimmen und Verfolgen der Merkmale optimal aufeinander abgestimmt, da ein Pixelfenster bzw. Merkmalsfenster nur dann als Merkmal charakterisiert wird, wenn das für das Verfolgen des Merkmals zu lösende lineare Gleichungssystem stabil lösbar ist. Hierzu wird aus den Gradienten zu den Pixeln des Pixelfensters in dem ersten Einzelbild eine Matrix gebildet und deren Eigenwerte berechnet. Die Matrix hat den Rang 2. Sofern beide Eigenwerte einen vordefinierten Schwellwert überschreiten, wird das Pixelfenster als Merkmal charakterisiert, dem erste Merkmalskoordinaten zugeordnet werden. Da die Merkmale auch als Merkmalspunkte bezeichnet werden, werden die Merkmalskoordinaten auch entsprechend als Punktkoordinaten bezeichnet. Diese Merkmalskoordinaten können die Pixelkoordinaten eines der im Pixelfenster liegenden Pixels sein. Die Matrix wird anschließend zum Verfolgen bzw. zum Bestimmen des Merkmals in dem zweiten Einzelbild verwendet. Hierzu wird aus der Matrix und einem Fehlervektor ein Verschiebungsvektor durch Lösen eines linearen Gleichungssystems berechnet. Der Verschiebungsvektor beschreibt die Verschiebung des Pixelfensters bzw. Merkmals in dem zweiten Einzelbild und gilt für alle Pixel des Pixelfensters.

Der merkmalsbasierte Algorithmus ist in dem Fachartikel "Detection and Tracking of Point Features" von Carlo Tomasi und Takeo Kanade (Technical Report CMU-CS-91-132, Carnegie Mellon University, 1991) im Detail beschrieben, auf den hiermit verwiesen wird. Der Algorithmus ist auch als KLT (Kanade-Lukas-Tomasi)-Tracking-Algorithmus oder als KLT-Tracker bzw. KLT-Algorithmus bekannt. Der KLT-Algorithmus basiert auf dem linearen Gleichungssystem

$$\mathbf{G} \cdot \mathbf{d} = \mathbf{e} \qquad (16)$$

wobei

**G**    eine symmetrische Matrix mit Rang 2,
**d**    ein Verschiebungsvektor (dx, dy) und
**e**    ein Fehlervektor ist.

Für jeweils zwei aufeinander folgende Einzelbilder I (nachfolgend auch $\mathbf{I_a}$) und J (nachfolgend auch $I_b$) kann die Matrix **G** durch Ermittlung der Gradienten **g** aus dem ersten Einzelbild wie folgt berechnet werden:

$$\mathbf{G} = \int_W \mathbf{g}\mathbf{g}^T w dA \qquad (17)$$

wobei

**g**              ein Gradientenvektor zu einem Pixel des Pixelfensters W,
w                 eine Gewichtungsfunktion zur Gewichtung der Pixel des Pixelfensters W und
dA = dx · dy    das Integrationsdifferenzial des Doppelintegrals ist.

Der zweidimensionale Fehlervektor **e** wird aus den berechneten Gradienten **g** und den Differenzen der Pixelwerte der Einzelbilder im Pixelfenster W wie folgt berechnet:

$$e = \int_W \big(I(\mathbf{x}) - J(\mathbf{x})\big) \cdot \mathbf{g} w \, dA \qquad (18)$$

wobei

I(x)        der Pixelwert des ersten Einzelbilds im Pixel **x**,
*J*(x)       der Pixelwert des zweiten Einzelbilds im Pixel **x**,
**g**        der Gradientenvektor zu einem Pixel des Pixelfensters W,
w        eine Gewichtungsfunktion zur Gewichtung der Pixel des Pixelfensters W und
dA = dx · dy   das Integrationsdifferenzial des Doppelintegrals ist.

Für diskrete Pixel sind die Doppelintegrale in den Gleichungen (16) bis (18) durch Doppelsummen in der x- und y-Richtung der Bildebene zu ersetzen.

Bei der Berechnung der Eigenwerte deuten zwei kleine Eigenwerte auf homogene Bildbereiche hin, während ein großer und ein kleiner Eigenwert für unidirektionale Merkmale, wie beispielsweise Kanten, stehen. Zwei große Eigenwerte deuten auf Ecken oder hochfrequente Texturen hin, welche gut zu verfolgende Merkmale sind. Da der größere Eigenwert nach oben durch die maximalen Pixelwerte bzw. Intensitätswerte begrenzt ist, ist es ausreichend, dass der kleinere der beiden Eigenwerte über einem bestimmten Schwellwert liegt. Folglich wird bei der Merkmalsauswahl ein Pixelfenster dann akzeptiert, wenn für deren Eigenwerte $\lambda_1$ und $\lambda_2$ gilt, dass

$$\min(\lambda_1, \lambda_2) > \lambda_t \qquad (19)$$

wobei

$\lambda_t$    ein vordefinierter Schwellwert ist.

Ein Verfahren nach Anspruch 4 erhöht die Genauigkeit bei der Berechnung der Verschiebungsvektoren. Bei der Lösung des linearen Gleichungssystems (16) wird der Verschiebungsvektor d(i) einen Restfehler aufweisen, da die Taylor-Approximation durch den linearen Term, also durch den Gradientenvektor g, nur dann eine präzise Lösung darstellt, wenn die Pixelwerte linear von x und y abhängen. Dies ist vor allem in Pixelbereichen mit hohen Frequenzen, die sich gut zum Verfolgen bzw. Tracken eignen, nicht der Fall. Die näherungsweise Lösung für den Verschiebungsvektor **d**(i) kann jedoch als Ausgangspunkt für weitere Iterationsschritte dienen, in denen das Gleichungssystem (1) erneut gelöst und ein neuer Verschiebungsvektor **d**(i+1) berechnet wird. Um zu prüfen, ob dies nötig ist, wird zunächst das jeweilige Pixelfenster um den bestimmten Verschiebungsvektor in einem der Einzelbilder verschoben. Da diese Position in der Regel zwischen diskreten Pixelkoordinaten liegt, werden mittels bilinearer Interpolation neue Pixelwerte für das Pixelfenster berechnet und hieraus anschließend der Fehler, also die Summe der quadratischen Differenzen der Pixelwerte bzw. Bildintensitäten, bestimmt. Übersteigt dieser Fehler einen vordefinierten Toleranzwert, werden ausgehend von dem aktuellen Verschiebungsvektor **d** weitere Iterationsschritte durchgeführt, bis der Fehler den Toleranzwert unterschreitet oder eine maximale Anzahl an Iterationsschritten erreicht ist. Typischerweise werden weniger als fünf Iterationsschritte benötigt, um das gesuchte Merkmal präzise zu lokalisieren. Da nach jedem Iterationsschritt durch lineare Interpolation die Pixelwerte bzw. Intensitätswerte neu bestimmt werden, kann der Verschiebungsvektor **d** mit Subpixelgenauigkeit berechnet werden.

Ein Verfahren nach Anspruch 5 ermöglicht eine Berechnung der Verschiebungsvektoren bei verhältnismäßig großen Verschiebungen zwischen den Einzelbildern. Der merkmalsbasierte Algorithmus ist aufgrund des ihm zugrunde liegenden linearen Ansatzes nur in der Lage, verhältnismäßig kleine Verschiebungen zu bestimmen. Durch einen pyramidenbasierten Ansatz, in dem die Einzelbilder in mehreren Auflösungsstufen j vorliegen, können auch größere Verschiebungen bestimmt werden. Ausgehend von einer niedrigsten Auflösungsstufe wird ein Merkmal, beispielsweise subpixelgenau, lokalisiert und die durch den Verschiebungsvektor **d**(j) errechnete Position auf die nächste Auflösungsstufe projiziert, wo sie als Ausgangspunkt für die weitere Berechnung des Verschiebungsvektors **d**(j+1) dient. Somit nähert sich der Algorithmus einer exakten Lösung für den Verschiebungsvektor **d** mit jeder Auflösungsstufe an, wobei die zu bestimmenden Verschiebungen pro Auflösungsstufe ausreichend klein sind. Der Algorithmus ist beispielsweise mit einem vorgebbaren Suchradius r steuerbar, welcher angibt, wie groß die Verschiebungen sein dürfen, die vom Algorithmus zu erkennen sind. Anhand des Suchradius berechnet der Algorithmus automatisch die Anzahl der Auflösungsstufen sowie den Faktor des Subsamplings zwischen zwei Auflösungsstufen. Gleichzeitig wird ein Grenzbereich in x- und y-Richtung definiert, der von dem Algorithmus bei der weiteren Berechnung ignoriert wird. Dies ist darin begründet, dass durch den Gauss-Filter, der auf jeder Auflösungsstufe angewandt wird, Randbereiche entstehen, die undefiniert sind.

Ein Verfahren nach Anspruch 6 gewährleistet, dass die zu verfolgenden Merkmale möglichst homogen über den Einzelbildern verteilt sind. Hierdurch können Verschiebungen in unterschiedlichste Richtungen einfach verfolgt werden.

Ein Verfahren nach Anspruch 7 gewährleistet eine hohe Bildqualität des Gesamtbilds. Die projektive Transformation wird auch als perspektivische Transformation oder Homografie bezeichnet. Mittels der projektiven Transformation kann die freie Bewegung eines bildgebenden Sensors über einem flachen Objekt modelliert oder eine beliebige Szene, bei der die Bewegung des bildgebenden Sensors auf die Rotation um seine eigene Achse eingeschränkt ist.

Ein Verfahren nach Anspruch 8 gewährleistet eine robuste und genaue Berechnung der Transformationsmatrix. Durch die abschließende Berechnung der Transformationsmatrix aus allen Inliern der besten Test-Transformationsmatrix wird eine optimale Genauigkeit der Transformationsmatrix erreicht.

Ein Verfahren nach Anspruch 9 gewährleistet ein einfaches und effizientes Zusammenfügen der Einzelbilder zu dem Gesamtbild, was insbesondere für die Echtzeitfähigkeit von Bedeutung ist. Dadurch, dass das zeitlich nachgeordnete Einzelbild beim Zusammenfügen dem zeitlich vorgeordneten Einzelbild überlagert wird, wird eine einfache Visualisierung des Gesamtbilds in Echtzeit gewährleistet. Das Gesamtbild ist eine hybride Darstellung aus einem statischen und einem dynamischen Anteil. Der statische Anteil sind zeitlich zurückliegende Einzelbilder, die von dem aktuellen Einzelbild als dynamischen Anteil überlagert sind. Vorzugsweise wird das aktuelle Einzelbild jeweils in der Monitormitte eines Monitors angezeigt. Das Bildmosaik ist somit immer auf die aktuellste Ansicht zentriert.

Ein Verfahren nach Anspruch 10 verbessert die Bildqualität des Gesamtbilds. Bildgebende Systeme mit Linsen, insbesondere Weitwinkellinsen, verursachen in den Einzelbildern Verzerrungen. Dies ist auch bei Endoskopsystemen der Fall. Die Entzerrung erfolgt mittels eines inversen Verzerr-Modells. Hinsichtlich der Entzerrung wird auf den Fachartikel "Precise Radial Un-distortion of Images" von John Mallon und Paul F. Whelan, veröffentlicht in "Proceedings of 17th International Conference on Pattern Recognition", 2004, verwiesen.

Ein Verfahren nach Anspruch 11 vermeidet das Bestimmen und Verfolgen von falschen Merkmalen. Endoskopisch aufgenommene Einzelbilder weisen regelmäßig einen hohen Anteil an Glanzlicht in Folge der zu inspizierenden glatten und/oder feuchten Oberflächen auf. Glanzlicht entsteht dort, wo das vom Endoskopsystem ausgestrahlte Licht senkrecht auf die Objektoberfläche auftrifft und von dort reflektiert wird. Da diese Glanzlichter hohe Pixelwerte bzw. Intensitätswerte haben, sind an den Grenzen der Glanzlichter oftmals die stärksten Kontraste zu finden, sodass der merkmalsbasierte Algorithmus hier die vermeintlich besten Merkmale findet. Diese Merkmale gehören jedoch nicht zur Szene, sondern werden bei der Aufnahme der Einzelbilder erzeugt und sind dementsprechend in ihrer Bewegung von der Bewegung des bildgebenden Sensors abhängig. Da sich das Glanzlicht von Einzelbild zu Einzelbild nur geringfügig verändert, können die zugehörigen Merkmale gut verfolgt werden, wobei auch der RANSAC-Algorithmus nicht in der Lage ist, sie ausreichend zu eliminieren. Dies führt letztendlich zu einer schlechten Transformationsmatrix. Da sich Glanzlichter in ihren Pixelwerten deutlich von dem Rest des Einzelbilds abheben, können diese relativ einfach durch einen Schwellwerttest und anschließender Erosion erkannt werden. Für jedes Einzelbild werden alle Pixelwerte mit einem Glanzlichtschwellwert verglichen. Die Pixel, deren Pixelwert den Glanzlichtschwellwert überschreiten, werden einer Glanzlichtmaske zugeordnet. Die so entstehende Glanzlichtmaske wird durch Erosion ausgeweitet. Diese entspricht einer morphologischen Dilation mit einem runden Strukturelement. Anhand der binären Glanzlichtmaske werden Merkmale in deren Bereich ausgeschlossen. Hierzu werden im Bereich der Glanzlichtmaske keine Merkmale bestimmt oder darin bestimmte Merkmale nicht verfolgt bzw. nicht zur Berechnung der Transformationsmatrix herangezogen.

Der Erfindung liegt ferner die Aufgabe zugrunde, eine Vorrichtung zum Zusammenfügen von mehreren digitalen Einzelbildern zu einem Gesamtbild zu schaffen, die schnell, insbesondere echtzeitfähig, und genau ist.

Diese Aufgabe wird durch eine Vorrichtung mit den Merkmalen des Anspruchs 12 gelöst. Die Vorteile der erfindungsgemäßen Vorrichtung entsprechen den bereits beschriebenen Vorteilen des erfindungsgemäßen Verfahrens. Insbesondere kann die Vorrichtung auch entsprechend den Ansprüchen 2 bis 11 weitergebildet werden.

Eine Vorrichtung nach Anspruch 13 erhöht die Genauigkeit beim Zusammenfügen der Einzelbilder zu dem Gesamtbild, insbesondere wenn die Einzelbilder mittels eines Endoskopsystems aufgenommen sind.

Eine Vorrichtung nach Anspruch 14 erhöht die Genauigkeit beim Zusammenfügen der Einzelbilder, wenn diese Glanzlichter enthalten.

Ein Endoskopsystem nach Anspruch 15 weist ein virtuell erweitertes Blickfeld auf. Das Endoskopsystem kann in der Technik zur Analyse und Prüfung von Bauteilen sowie zur Dokumentation von Fehlstellen eingesetzt werden. Darüber hinaus kann das Endoskopsystem in der Medizin zur Untersuchung von Hohlorganen und zur Dokumentation von Läsionen sowie in der minimalinvasiven Chirurgie eingesetzt werden.

Weitere Merkmale, Vorteile und Einzelheiten der Erfindung ergeben sich aus der nachfolgenden Beschreibung eines Ausführungsbeispiels. Es zeigen:

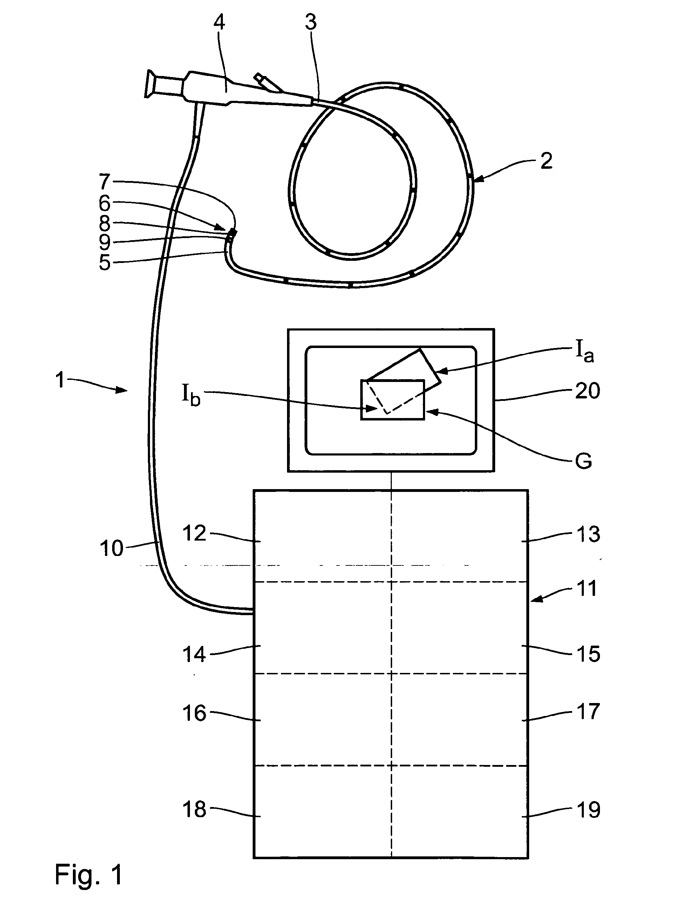

Fig. 1     eine schematische Ansicht eines Endoskopsystems mit einer Vorrichtung zum Zusammenfügen von digitalen Einzelbildern zu einem Gesamtbild,

Fig. 2     eine schematische Ansicht von zwei aufeinanderfolgend aufgenommenen Einzelbildern,

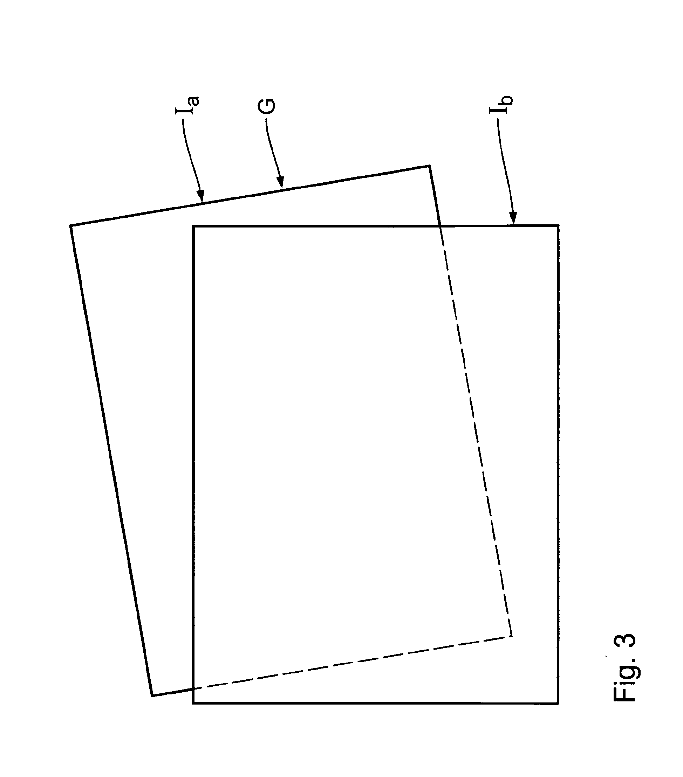

Fig. 3     eine schematische Ansicht eines aus den Einzelbildern in Fig. 2 zusammengefügten Gesamtbilds,

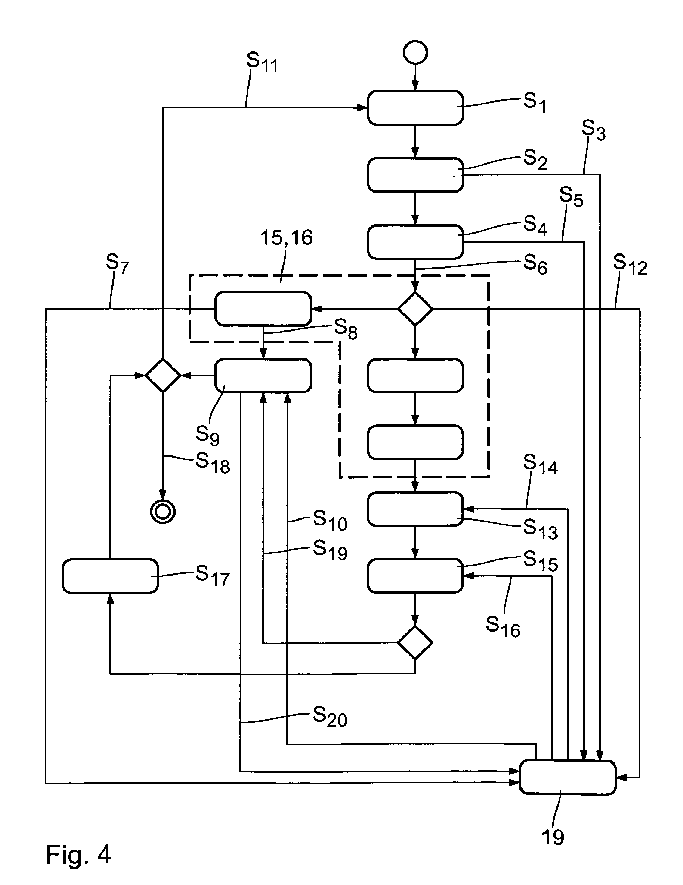

Fig. 4     einen schematischen Ablaufplan des Verfahrens zum Zusammenfügen der Einzelbilder zu dem Gesamtbild, und

Fig. 5     einen schematischen Ablaufplan des merkmalsbasierten Algorithmus zum Bestimmen und Verfolgen von Merkmalen in den Einzelbildern.

Ein Endoskopsystem 1 weist einen Schaft 2 auf, an dem an einem ersten Ende 3 ein Griff 4 und an einem zweiten Ende 5 ein bildgebendes System 6 angeordnet ist. Der Schaft 2 ist flexibel ausgebildet. Alternativ kann dieser auch starr sein.

Das optische System 6 umfasst eine Strahlungsquelle 7, eine Weitwinkellinse 8 und einen bildgebenden Kamera-Sensor 9. Die Strahlungsquelle 7 sowie der Kamera-Sensor 9 können über den Griff 4 gesteuert werden. Der bildgebende Sensor 9 ist beispielsweise als miniaturisierter Videosensor in Tip-Chip-Technologie ausgebildet.

Die von dem Sensor 9 aufgenommenen Einzelbilder $I_a, I_b$ werden über eine Signalleitung 10 von dem Sensor 9 zu einer Vorrichtung 11 übertragen, die zum Zusammenfügen der digitalen Einzelbilder $I_a, I_b$ zu einem Gesamtbild G dient. Die Signalleitung 10 ist beispielsweise als elektrische Bildübertragungsleitung ausgebildet.

Die Vorrichtung 11 ist als Personalcomputer ausgebildet, auf dem eine Eingabeeinheit 12, eine Entzerreinheit 13, eine Glanzlichteinheit 14, eine Auswahleinheit 15, eine Verfolgungseinheit 16, eine Transformationseinheit 17 und eine Ausgabeeinheit 18 implementiert sind. Zur Speicherung von Daten weist die Vorrichtung zusätzlich eine Speichereinheit 19 auf. Zur Visualisierung des Gesamtbilds G ist die Vorrichtung 11 an einen Monitor 20 angeschlossen.

Mit dem Kamera-Sensor 9 werden zunächst in einem zeitlichen Abstand $\Delta t$ ein erstes Einzelbild $I_a$ sowie ein zeitlich nachfolgendes zweites Einzelbild $I_b$ aufgenommen. Zwischen der Aufnahme der Einzelbilder $I_a$ und $I_b$ wurde der Kamera-Sensor 9 verschoben, sodass die vor dem Kamera-Sensor 9 liegende Szene aus unterschiedlichen Positionen aufgenommen wurde.

Das Einzelbild $I_a$ wird zunächst im Schritt $S_1$ in die Eingabeeinheit 12 eingelesen und anschließend in der Entzerreinheit 13 im Schritt $S_2$ mittels eines inversen Verzerr-Modells entzerrt. Das entzerrte Einzelbild $I_a$ wird im Schritt $S_3$ in der Speichereinheit 19 abgelegt. Anschließend wird das entzerrte Einzelbild $I_a$ der Glanzlichteinheit 14 übergeben, die im Schritt $S_4$ eine Glanzlichtmaske $L_a$ erstellt, die im Schritt $S_5$ in der Speichereinheit 19 abgelegt wird. Zum Erstellen der Glanzlichtmaske $L_a$ werden die Pixelweret $p_a(x,y)$ mit einem Glanzlichtschwellwert $t_1$ verglichen und diejenigen Pixel der Glanzlichtmaske $L_a$ zugeordnet, deren Pixelwert $p_a(x,y)$ den Glanzlichtschwellwert $t_1$ überschreiten. Anschließend wird dieser Pixelbereich bzw. diese Pixelbereiche durch morphologische Dilation mit einem runden Strukturelement erweitert und so die Glanzlichtmaske $L_a$ gebildet.

Anschließend wird das Einzelbild $I_a$ im Schritt $S_6$ der Auswahleinheit 15 und der Verfolgungseinheit 16 zugeführt, in denen der merkmalsbasierte Algorithmus, beispielsweise der KLT- Algorithmus, implementiert ist. Die genaue Funktionsweise des KLT-Algorithmus wird nachfolgend noch genauer erläutert.

Die Auswahleinheit 15 gibt im Schritt $S_7$ n Merkmale $M_1$ bis $M_n$ aus, die in dem Einzelbild $I_a$ bestimmt wurden. Die Merkmale $M_1$ bis $M_n$ sind durch zugehörige Merkmalskoordinaten $\mathbf{p}_1^a$ bis $\mathbf{p}_n^a$ charakterisiert, die in der Speichereinheit 19 abgelegt werden. Das Einzelbild $I_a$ wird im Schritt $S_8$ der Ausgabeeinheit 18 zugeführt, mit der dieses im Schritt $S_9$ in einer planaren Projektionsfläche dargestellt wird. Für das erste Einzelbild $I_a$ erfolgt noch kein Zusammenfügen, da kein weiteres Einzelbild vorliegt. Der Ursprung des ersten Einzelbildes $I_a$ kann in Schritt $S_9$ neu festgelegt werden. Hierzu wird aus der Speichereinheit 19 im Schritt $S_{10}$ eine Ursprungs-Transformationsmatrix $\mathbf{H}_{a,0}$ ausgelesen werden. Anschließend wird im Schritt $S_{11}$ zu Schritt $S_1$ zurückgegangen, wo das nachfolgende zweite Einzelbild $I_b$ im Schritt $S_1$ eingelesen wird. Anschließend werden die Schritte $S_2$ bis $S_7$ für das Einzelbild $I_b$ wiederholt.

Anschließend werden die in dem ersten Einzelbild $I_a$ bestimmten Merkmale $M_1$ bis $M_n$ in dem zweiten Einzelbild $I_b$ bestimmt. Dieser Vorgang wird auch als Tracken bzw. Verfolgen bezeichnet. Im Schritt $S_{12}$ werden die Merkmale $M_1$ bis $M_n$ sowie Parameter für den KLT-Algorithmus, wie beispielsweise einem Suchradius r, aus der Speichereinheit 19 in die Verfolgungseinheit 16 eingelesen. Die Funktionsweise der Verfolgungseinheit 16 wird nachfolgend noch im Detail beschrieben.

Das Ergebnis des KLT-Algorithmus, das von der Verfolgungseinheit 16 ausgegeben wird, sind Merkmalskorrespondenzen, die für jedes der Merkmale $M_1$ bis $M_n$ aus den ersten Merkmalskoordinaten $\mathbf{p}_1^a$ bis $\mathbf{p}_n^a$ sowie zugehörigen zweiten Merkmalskoordinaten $\mathbf{p}_1^b$ bis $\mathbf{p}_n^b$ bestehen. Die Merkmalskorrespondenzen sind dementsprechend $(\mathbf{p}_1^a, \mathbf{p}_1^b)$ bis $(\mathbf{p}_n^a, \mathbf{p}_n^b)$. Die Merkmalskorrespondenzen werden im Schritt $S_{13}$ gebildet, wobei im Schritt $S_{14}$ die Glanzlichtmasken $L_a$ und $L_b$ einfließen, sodass keine Merkmale M zugelassen werden, die innerhalb einer der Glanzlichtmasken $L_a$ oder $L_b$ liegen.

Im Schritt $S_{15}$ wird in der Transformationseinheit 17 die Transformationsmatrix $H_{b,a}$ berechnet. Die Berechnung erfolgt entsprechend den Gleichungen (1) bis (24) mittels des RANSAC-Algorithmus, wozu in Schritt $S_{16}$ Parameter für den RANSAC-Algorithmus, wie beispielsweise die Größe der ersten Teilmenge $T_1$ und der zweiten Teilmenge $T_2$ von Merkmalen $M_i$ sowie die Anzahl N der Iterationen eingelesen wird. Für nachfolgende Einzelbilder kann in Schritt $S_{16}$ zusätzlich noch eine Merkmalshistorie eingelesen werden. Die Merkmalshistorie enthält alle Koordinaten und Werte eines Merkmals über die Zeit und kann von Nutzen sein, wenn Merkmale verloren gehen. Mit der Merkmalshistorie können zusätzliche Merkmalskorrespondenzen zwischen vergangenen Einzelbildern und dem aktuellen Einzelbild generiert werden, um das Gesamtbild bzw. dessen Entstehungsprozess zu stabilisieren. Die Merkmalskoordinaten des verlorenen Merkmals werden mittels der Transformationsmatrix bzw. über mehrere aufeinanderfolgende Einzelbilder hinweg mittels mehrerer Transformationsmatrizen weitertransformiert. Dadurch können diese Merkmale in der Liste der Merkmalskorrespondenzen weitergeführt werden.

Zur Berechnung der Transformationsmatrix $H_{b,a}$ werden die Merkmalskoordinaten zunächst normalisiert und anschließend die Transformationsmatrix $\mathbf{H_{b,a}}$ mittels des RANSAC-Algorithmus berechnet. Hierzu wird aus der Gesamtmenge der Merkmale $M_1$ bis $M_n$ eine erste Teilmenge $T_1$ ausgewählt. Im Falle einer projektiven Transformationsmatrix sind acht Unbekannte zu bestimmen, sodass mindestens vier Merkmalskoordinaten ausgewählt werden müssen, um die Transformationsmatrix $H_{b,a}$ eindeutig zu berechnen. Der RANSAC-Algorithmus führt N-Iterationsschritte durch, wobei in jedem Iterationsschritt eine erste Teilmenge $T_1$ zufällig ausgewählt und eine Test-Transformationsmatrix $\mathbf{T}$ berechnet wird. Anschließend wird die berechnete Test-Transformationsmatrix $\mathbf{T}$ mit einer zweiten Teilmenge $T_2$ von Merkmalen $M_i$ überprüft, wobei sich die Teilmengen $T_1$ und $T_2$ nicht überschneiden. Als Gütewert für die jeweilige Test-Transformationsmatrix $\mathbf{T}$ wird die Anzahl $N_I$ der sogenannten Inlier herangezogen. Ein Merkmal $M_i$ der zweiten Teilmenge $T_2$ ist dann ein Inlier, wenn dieses innerhalb einer vordefinierten Genauigkeit durch das berechnete Test-Transformationsmodell abgebildet werden kann. Hierzu wird mit der Test-Transformationsmatrix $\mathbf{T}$ der euklidische Abstand berechnet. Die Test-Transformationsmatrix $\mathbf{T}$ mit der höchsten Anzahl $N_I$ an Inliern wird als Ausgangspunkt verwendet, um mit allen als Inlier gekennzeichneten Merkmalen $M_i$ der zweiten Teilmenge $T_2$ die Transformationsmatrix $H_{b,a}$ zu berechnen.

Wird keine Transformationsmatrix gefunden, so wird das Einzelbild $I_b$ im Schritt $S_{17}$ verworfen und im Schritt $S_{11}$ ein weiteres Einzelbild eingelesen. Liegt kein weiteres Einzelbild vor, so endet das Verfahren im Schritt $S_{18}$. Wird eine Transformationsmatrix $H_{b,a}$ gefunden, so wird diese im Schritt $S_{19}$ an die Ausgabeeinheit 18 übergeben, in der die Einzelbilder $I_a$ und $I_b$ zu dem Gesamtbild G zusammengefügt werden. Das Gesamtbild G wird durch den Monitor 20 visualisiert, wobei vorzugsweise das aktuelle Einzelbild $I_b$ dem bzw. den vorangehenden Einzelbildern $I_a$ überlagert wird. Das aktuellste Einzelbild $I_b$ wird vorzugsweise mittig auf dem Monitor 20 dargestellt.

Die Transformationsmatrix $H_{b,a}$ wird im Schritt $S_{20}$ in der Speichereinheit 19 abgelegt. Liegt kein weiteres Einzelbild vor, endet das Verfahren im Schritt $S_{18}$.

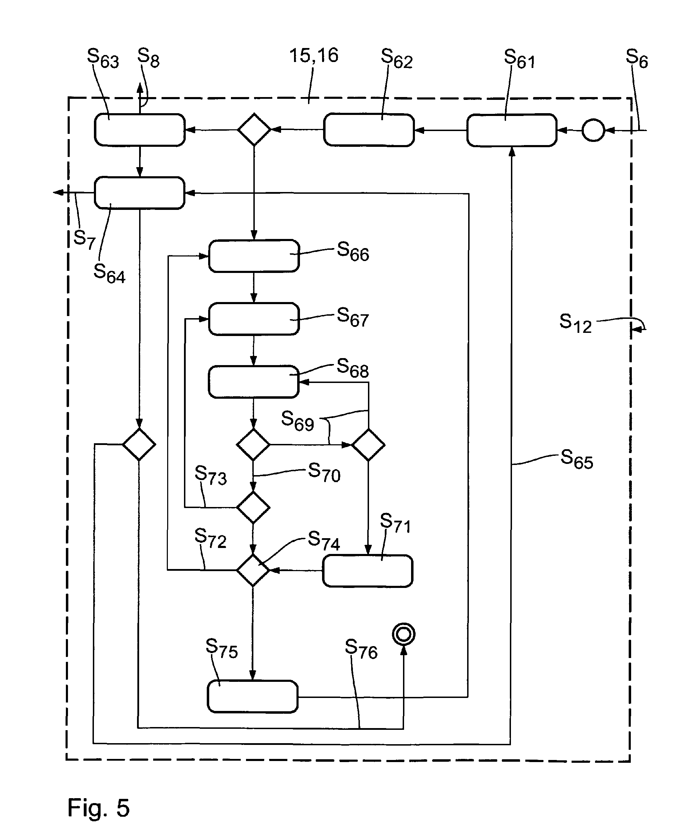

Nachfolgend wird unter Bezugnahme auf Fig. 5 die Funktionsweise der Auswahleinheit 15 und der Verfolgungseinheit 16 genauer beschrieben. Im Schritt $S_6$ wird das Einzelbild $I_a$ zunächst eingelesen. Das Einzelbild $I_a$ wird dann im Schritt $S_{61}$ mit einem Glättungsfilter geglättet und anschließend im Schritt $S_{62}$ eine Auflösungspyramide aus mehreren Auflösungsstufen j erstellt. Die Anzahl der Auflösungsstufen j wird beispielsweise aus einem vorgegebenen Suchradius r berechnet.

Anschließend werden aus dem Einzelbild $I_a$ n Merkmale $M_1$ bis $M_n$ entsprechend den Gleichungen (16) bis (19) bestimmt bzw. extrahiert. Die Merkmale $M_1$ bis $M_n$ werden in allen Auflösungsstufen j berechnet, damit diese im darauffolgenden Einzelbild $I_b$ auch bei großen Verschiebungen verfolgt werden können. Der Verschiebungsvektor wird zunächst in der niedrigsten Auflösungsstufe bestimmt und anschließend in die nächsthöhere Auflösungsstufe projiziert. Die Verschiebung in Pixeln kann somit in jeder Auflösungsstufe auf ein gewünschtes Maß begrenzt werden.

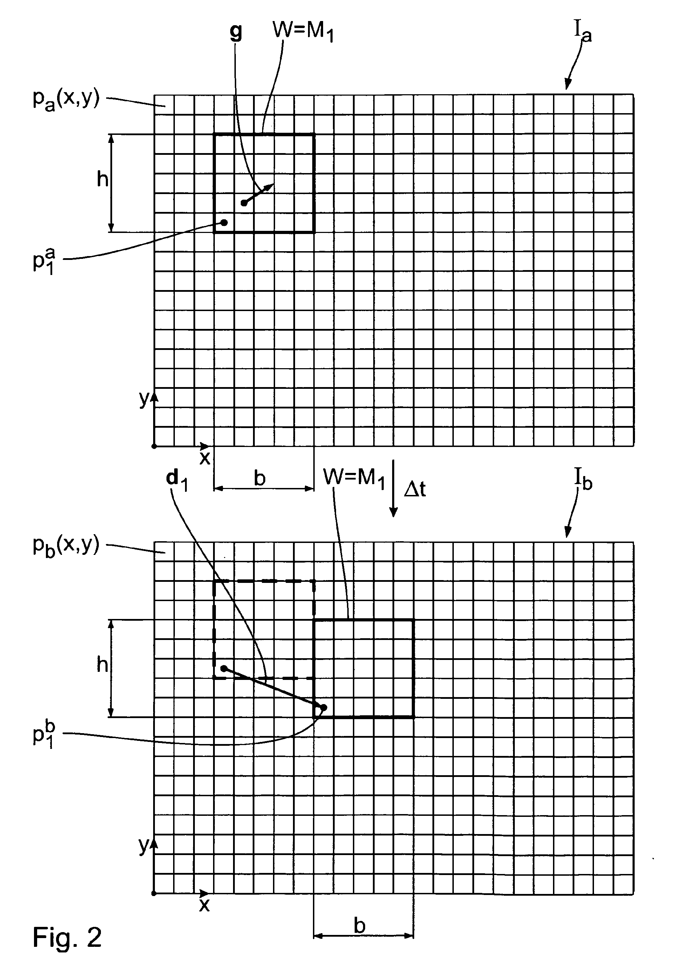

Im Schritt $S_{63}$ wird ein Pixelfenster W mit einer vordefinierten Breite b in x-Richtung und einer vordefinierten Höhe h in y-Richtung über das Einzelbild $I_a$ verschoben, wobei in jeder bzw. einer Vielzahl von Positionen des Pixelfenster W eine Matrix $\mathbf{G}$ entsprechend Gleichung (17) berechnet wird. Die Matrix $\mathbf{G}$ ergibt sich aus der Summe der Produkte $\mathbf{gg}^T$ über alle Pixel des Pixelfensters W, wobei $\mathbf{g}$ der Gradientenvektor zu einem bestimmten Pixel des Pixelfensters W ist. In Fig. 2 ist beispielhaft das Pixelfenster W des Merkmals $M_1$ mit einem Gradientenvektor $\mathbf{g}$ eingezeichnet. Zusätzlich

kann eine Gewichtungsfunktion w berücksichtigt werden. Ist dies nicht gewünscht, kann w = 1 gewählt werden. Zu jedem Pixelfenster W werden die Eigenwerte $\lambda_1$ und $\lambda_2$ der Matrix **G** berechnet und anhand von Gleichung (19) entschieden, ob das Pixelfenster W ein Merkmal M charakterisiert. Zusätzlich muss ein neu hinzukommendes Merkmal M einen Minimalabstand $\Delta$M zu den bereits bestimmten Merkmalen M einhalten. In Schritt $S_{64}$ wird eine Speicherung der bestimmten Merkmale $M_1$ bis $M_n$ eingeleitet, sodass diese im Schritt $S_7$ an die Speichereinheit 19 übermittelt werden. Anschließend wird im Schritt $S_{65}$ wieder zu Schritt $S_{61}$ zurückgegangen, wo das zweite Einzelbild $I_b$ eingelesen und geglättet sowie in Schritt $S_{62}$ eine Auflösungspyramide hierzu erstellt wird.

Für das Verfolgen bzw. Tracken der Merkmale $M_1$ bis $M_n$ in der Verfolgungseinheit 16 werden diese der Reihe nach in Schritt $S_{66}$ ausgewählt. Zunächst werden für das erste Merkmal $M_1$ die Einzelbilder $I_a$ und $I_b$ in der niedrigsten Auflösungsstufe j = 1 in Schritt $S_{67}$ ausgewählt. Anschließend wird für diese Auflösungsstufe das Gleichungssystem (16) gelöst. Die Lösung des Gleichungssystems (16) ist der Verschiebungsvektor **d** für das erste Merkmal $M_1$. Die Matrix **G** ist für Schritt $S_{68}$ bereits bekannt. Der Fehlervektor e wird in Schritt $S_{68}$ nach Gleichung (18) berechnet, wobei das Pixelfenster W in einem ersten Iterationsschritt i = 1 in dem zweiten Einzelbild $I_b$ an einer dem ersten Einzelbild $I_a$ entsprechenden Stelle angenommen wird. Der in dem ersten Iterationsschritt ermittelte Verschiebungsvektor **d**(i, j) ist noch fehlerbehaftet. Für einen zweiten Iterationsschritt i = 2 wird das Pixelfenster P in dem zweiten Einzelbild $I_b$ an einer um den im ersten Iterationsschritt ermittelten Verschiebungsvektor **d** verschobenen Stelle angenommen. Das Gleichungssystem (16) wird mit einem neu berechneten Fehlervektor **e** erneut gelöst, wobei der im zweiten Iterationsschritt ermittelte zweite Verschiebungsvektor **d** eine verbesserte Lösung des Gleichungssystems (16) darstellt. Der beschriebene Iterationsschritt $S_{69}$ wird solange wiederholt, bis die Lösung für den Verschiebungsvektor **d** konvergiert und das Merkmal $M_1$ in dem zweiten Einzelbild $I_b$ im Schritt $S_{70}$ bestimmt ist. Das Lösen des Gleichungssystems (16) kann beispielsweise mittels des Newton-Raphson-Algorithmus erfolgen. Wird nach einer Höchstzahl von Iterationen keine konvergierende Lösung für den Verschiebungsvektor **d** gefunden, wird das zugehörige Merkmal $M_1$ im Schritt $S_{71}$ verworfen und im Schritt $S_{72}$ zu Schritt $S_{66}$ zurückgegangen, wo das nächste Merkmal $M_2$ ausgewählt wird.

Ist das Merkmal $M_1$ im Schritt $S_{70}$ bestimmt, so wird im Schritt $S_{73}$ zu Schritt $S_{67}$ zurückgegangen, wo die nächsthöhere Auflösungsstufe j = 2 der Einzelbilder $I_a$ und $I_b$ ausgewählt wird. Anschließend werden die Schritte $S_{68}$, $S_{69}$ und $S_{70}$ für diese Auflösungsstufe unter Berücksichtigung des in der vorangegangenen Auflösungsstufe ermittelten Verschiebungsvektors **d** wiederholt. Wurde diese Schleife für alle Auflösungsstufen j durchlaufen, so wird im Schritt $S_{74}$ überprüft, ob weitere zu bestimmende Merkmale M vorliegen. Ist dies der Fall, wird Schritt $S_{72}$ wiederholt. Wurden alle Merkmale M im Einzelbild $I_b$ bestimmt, so werden im Schritt $S_{75}$ verlorene Merkmale M ersetzt. Ein Merkmal M kann verloren werden, wenn dieses in dem Einzelbild $I_b$ aufgrund der Verschiebung des Sensors 9 nicht mehr enthalten ist oder es im Schritt $S_{71}$ als unbrauchbar verworfen wurde. In Schritt $S_{75}$ werden verloren gegangene Merkmale M derart ersetzt, dass die Anzahl der Merkmal M wieder n beträgt. Das Ersetzen der Merkmale M im Schritt $S_{75}$ erfolgt entsprechend dem Schritt $S_{63}$. Für die neu hinzugekommenen Merkmale M wird in Schritt $S_{67}$ ein Speichervorgang initiiert. Sofern weitere Einzelbilder vorliegen, wird Schritt $S_{65}$ wiederholt. Liegen keine weiteren Einzelbilder I vor, wird der KLT-Algorithmus im Schritt $S_{76}$ verlassen und zu Schritt $S_{13}$ übergegangen.

Zum Zusammenfügen der Einzelbilder $I_a$ und $I_b$ werden die x- und y-Koordinaten der Pixel des verschobenen Einzelbildes $I_b$ auf den nächsten ganzzahligen Wert gerundet. Dieses Verfahren wird auch als "nearest neighbour"-Verfahren bezeichnet. Die nachfolgenden Einzelbilder können durch Multiplikation der aktuellen Transformationsmatrix $\mathbf{H_{i,i-1}}$ mit der vorangegangenen Transformationsmatrix $\mathbf{H}_{i-1,0}$ wie folgt berechnet werden:

$$\mathbf{H_{i,0}} = \mathbf{H_{i-1,\,0}} \cdot \mathbf{H_{i,i-1}} \qquad\qquad (25)$$

Mit dem erfindungsgemäßen Verfahren und der entsprechenden Vorrichtung 11 können 6 bis 25 Bilder pro Sekunde auf einem PC vom Typ Intel Core 2 6420 mit 2,13 GHz und 2 GB RAM erzielt werden.

**Patentansprüche**

1. Verfahren zum Zusammenfügen von mehreren digitalen Einzelbildern zu einem Gesamtbild, umfassend die Schritte:

   - Bereitstellen eines ersten digitalen Einzelbildes ($I_a$) und eines mit diesem überlappenden zweiten digitalen Einzelbildes ($I_b$),
   - Bestimmen von mehreren Merkmalen des ersten Einzelbildes ($I_a$), wobei den Merkmalen jeweils erste Merkmalskoordinaten zugeordnet werden,
   - Bestimmen der Merkmale in dem zweiten Einzelbild ($I_b$), wobei den Merkmalen jeweils zweite Merkmalskoordinaten zugeordnet werden,

- Bestimmen einer mindestens sechs Freiheitsgrade aufweisenden Transformationsmatrix zwischen den Einzelbildern ($I_a$, $I_b$), indem

-- eine erste Teilmenge der Merkmale ausgewählt wird,
-- aus den ersten und zweiten Merkmalskoordinaten dieser Teilmenge eine Test-Transformationsmatrix berechnet wird,
-- zu der Test-Transformationsmatrix mit einer zweiten Teilmenge der Merkmale ein Gütewert ermittelt wird, und
-- die Transformationsmatrix ausgehend von der Test-Transformationsmatrix ermittelt wird, wenn der Gütewert ein Gütekriterium erfüllt, und

- Zusammenfügen der Einzelbilder ($I_a$, $I_b$) zu einem Gesamtbild (G) mittels der Transformationsmatrix,

**dadurch gekennzeichnet, dass**
die Merkmalskoordinaten vor der Berechnung der Transformationsmatrix normalisiert werden und die Normalisierung derart erfolgt, dass die einem Einzelbild ($I_a$, $I_b$) zugehörigen Merkmalskoordinaten jeweils zu einem aus diesen Merkmalskoordinaten berechneten Schwerpunkt einen durchschnittlichen Abstand von $\sqrt{2}$ haben.

2. Verfahren nach Anspruch 1, **dadurch gekennzeichnet, dass** die Merkmalskoordinaten iterativ in unterschiedlichen Auflösungsstufen der Einzelbilder ($I_a$, $I_b$) ermittelt werden.

3. Verfahren nach Anspruch 1 oder 2, **dadurch gekennzeichnet, dass** die Merkmale des ersten Einzelbilds ($I_a$) bestimmt werden, indem jeweils

- aus mehreren benachbarten Pixeln ein Pixelfenster (W) gebildet wird,
- aus den Gradienten (g) zu diesen Pixeln eine Matrix gebildet wird,
- von der Matrix die Eigenwerte berechnet werden,
- das Pixelfenster (W) als Merkmal charakterisiert wird, wenn die Eigenwerte einen Schwellwert überschreiten, und
- dem Merkmal erste Merkmalskoordinaten zugeordnet werden, und die Merkmale in dem zweiten Einzelbild ($I_b$) bestimmt werden, indem jeweils
- zu dem Merkmal ein Fehlervektor in Abhängigkeit der Gradienten und der Differenzen der Pixelwerte ($p_a(x, y)$, $p_b(x, y)$) der Einzelbilder ($I_a$, $I_b$) im Pixelfenster (W) gebildet wird,
- ein Verschiebungsvektor aus dem Fehlervektor und der Matrix berechnet wird, und
- dem Merkmal zweite Merkmalskoordinaten zugeordnet werden.

4. Verfahren nach Anspruch 3, **dadurch gekennzeichnet, dass** die Berechnung des jeweiligen Verschiebungsvektors iterativ erfolgt, indem

- die Einzelbilder ($I_a$, $I_b$) um einen ersten Verschiebungsvektor relativ zueinander verschoben werden, und
- mittels der verschobenen Einzelbilder ($I_a$, $I_b$) ein zweiter Verschiebungsvektor berechnet wird.

5. Verfahren nach Anspruch 3 oder 4, **dadurch gekennzeichnet, dass** die Berechnung des jeweiligen Verschiebungsvektors unterschiedlichen Auflösungsstufen der Einzelbilder ($I_a$, $I_b$) erfolgt, indem

- ein erster Verschiebungsvektor in einer ersten, niedrigen Auflösungsstufe der Einzelbilder ($I_a$, $I_b$) berechnet wird,
- die Einzelbilder ($I_a$, $I_b$) in einer zweiten, höheren Auflösungsstufe um den ersten Verschiebungsvektor relativ zueinander verschoben werden, und
- ein zweiter Verschiebungsvektor mittels der verschobenen Einzelbilder ($I_a$, $I_b$) in der zweiten Auflösungsstufe berechnet wird.

6. Verfahren nach einem der Ansprüche 1 bis 5, **dadurch gekennzeichnet, dass** ein Pixelfenster (W) nur als Merkmal charakterisiert wird, wenn ein Minimalabstand zu den bereits bestimmten Merkmalen überschritten wird.

7. Verfahren nach einem der Ansprüche 1 bis 6, **dadurch gekennzeichnet, dass** die Transformationsmatrix genau acht Freiheitsgrade aufweist und eine projektive Transformation charakterisiert.

**8.** Verfahren nach einem der Ansprüche 1 bis 7, **dadurch gekennzeichnet, dass** die Berechnung der Transformationsmatrix derart erfolgt, dass für eine Wiederholungsanzahl

- jeweils eine erste Teilmenge der Merkmale ausgewählt wird,
- eine zu dieser Teilmenge zugehörige Test-Transformations-matrix berechnet wird,
- zu der jeweiligen Test-Transformationsmatrix als Gütewert die Anzahl der Merkmale einer zweiten Teilmenge ermittelt wird, die durch die Test-Transformationsmatrix mit einer definierten Genauigkeit abgebildet werden,
- die Test-Transformationsmatrix mit der höchsten Anzahl ausgewählt wird, und
- aus den zugehörigen Merkmalen, die mit der definierten Genauigkeit abbildbar sind, die Transformationsmatrix berechnet wird.

**9.** Verfahren nach einem der Ansprüche 1 bis 8, **dadurch gekennzeichnet, dass** die Einzelbilder ($I_a$, $I_b$) in einer planaren Projektionsfläche zusammengefügt werden, wobei insbesondere das zeitlich nachgeordnete Einzelbild ($I_b$) beim Zusammenfügen dem zeitlich vorgeordneten Einzelbild ($I_a$) überlagert wird.

**10.** Verfahren nach einem der Ansprüche 1 bis 9, **dadurch gekennzeichnet, dass** die Einzelbilder ($I_a$, $I_b$) vor dem Bestimmen der Merkmale entzerrt werden.

**11.** Verfahren nach einem der Ansprüche 1 bis 10, **dadurch gekennzeichnet, dass** für jedes Einzelbild ($I_a$, $I_b$) eine Glanzlichtmaske erstellt wird, indem Pixelwerte ($p_a(x, y)$, $p_b(x, y)$) detektiert werden, die einen Glanzlichtschwellwert überschreiten und in den Glanzlichtmasken keine Merkmale für die Berechnung der Transformationsmatrix zugelassen werden.

**12.** Vorrichtung zum Zusammenfügen von mehreren digitalen Einzelbildern zu einem Gesamtbild mit

- einer Eingabeeinheit (12) zum Bereitstellen eines ersten digitalen Einzelbildes ($I_a$) und eines mit diesem überlappenden zweiten digitalen Einzelbildes ($I_b$),
- einer Auswahleinheit (15) zum Bestimmen von mehreren Merkmalen des ersten Einzelbildes ($I_a$), die derart ausgebildet ist, dass den Merkmalen jeweils erste Merkmalskoordinaten zugeordnet werden,
- einer Verfolgungseinheit (16) zum Bestimmen der Merkmale in dem zweiten Einzelbild ($I_b$), die derart ausgebildet ist, dass den Merkmalen jeweils zweite Merkmalskoordinaten zugeordnet werden,
- einer Transformationseinheit (17) zum Bestimmen einer mindestens sechs Freiheitsgrade aufweisenden Transformationsmatrix zwischen den Einzelbildern ($I_a$, $I_b$), die derart ausgebildet ist, dass

-- eine erste Teilmenge der Merkmale ausgewählt wird,
-- aus den ersten und zweiten Merkmalskoordinaten dieser Teilmenge eine Test-Transformationsmatrix berechnet wird,
-- zu der Test-Transformationsmatrix mit einer zweiten Teilmenge der Merkmale ein Gütewert ermittelt wird, und
-- die Transformationsmatrix ausgehend von der Test-Transformationsmatrix ermittelt wird, wenn der Gütewert ein Gütekriterium erfüllt, und

- einer Ausgabeeinheit (18) zum Zusammenfügen der Einzelbilder ($I_a$, $I_b$) zu einem Gesamtbild (G) mittels der Transformationsmatrix,

**dadurch gekennzeichnet, dass**
die Transformationseinheit (17) derart ausgebildet ist, dass die Merkmalskoordinaten vor der Berechnung der Transformationsmatrix normalisiert werden und die Normalisierung derart erfolgt, dass die einem Einzelbild ($I_a$, $I_b$) zugehörigen Merkmalskoordinaten jeweils zu einem aus diesen Merkmalskoordinaten berechneten Schwerpunkt einen durchschnittlichen Abstand von $\sqrt{2}$ haben.

**13.** Vorrichtung nach Anspruch 12, **dadurch gekennzeichnet, dass** eine Entzerreinheit (13) zum Entzerren der Einzelbilder ($I_a$, $I_b$) vorgesehen ist.

**14.** Vorrichtung nach Anspruch 12 oder 13, **dadurch gekennzeichnet, dass** eine Glanzlichteinheit (14) zum Bestimmen von Glanzlichtmasken der Einzelbilder ($I_a$, $I_b$) vorgesehen ist.

**15.** Endoskopsystem mit

- einem an einem Schaft (2) angeordneten bildgebenden Sensor (9) zur Aufnahme von digitalen Einzelbildern ($I_a$, $I_b$) und
- einer Vorrichtung (11) zum Zusammenfügen von mehreren digitalen Einzelbildern ($I_a$, $I_b$) zu einem Gesamtbild (G) nach einem der Ansprüche 12 bis 14.

**Claims**

1. Method for joining a plurality of individual digital images to form a total image, comprising the steps:

- providing a first individual digital image ($I_a$) and a second individual digital image ($I_b$) overlapping the latter,
- determining a plurality of features of the first individual image ($I_a$), wherein the features are each allocated first feature coordinates,
- determining the features in the second individual image ($I_b$), wherein the features are each allocated second feature coordinates,
- determining a transformation matrix having at least six degrees of freedom between the individual images ($I_a$, $I_b$), in that

-- a first part quantity of the features is selected,
-- a test transformation matrix is calculated from the first and second feature coordinates of this part quantity,
-- a quality value is determined for the test transformation matrix with a second part quantity of the features, and
-- the transformation matrix is determined proceeding from the test transformation matrix, when the quality value fulfils a quality criterion, and

- joining the individual images ($I_a$, $I_b$) to form a total image (G) by means of the transformation matrix

**characterized in that**
the feature coordinates are normalized before the calculation of the transformation matrix and the normalization takes place in such a way that the feature coordinates belonging to an individual image ($I_a$, $I_b$) each have an average distance of $\sqrt{2}$ from a focal point calculated from these feature coordinates.

2. Method according to claim 1, **characterized in that** the feature coordinates are determined iteratively in different resolution stages of the individual images ($I_a$, $I_b$).

3. Method according to claim 1 or 2, **characterized in that** the features of the first individual image ($I_a$) are determined, **in that** in each case

- a pixel window (W) is formed from a plurality of adjacent pixels,
- a matrix is formed from the gradients (g) for these pixels,
- the eigenvalues are calculated from the matrix,
- the pixel window (W) is characterized as the feature, if the eigenvalues exceed a threshold value, and
- the feature is allocated first feature coordinates, and
the features in the second individual image ($I_b$) are determined, **in that** in each case
- an error vector is formed for the feature as a function of the gradients and the differences in the pixel values ($p_a(x, y)$, $p_b(x, y)$) of the individual images ($I_a$, $I_b$) in the pixel window (W),
- a displacement vector is calculated from the error vector and the matrix, and
- the feature is allocated second feature coordinates.

4. Method according to claim 3, **characterized in that** the calculation of the respective displacement vector takes place iteratively, **in that**

- the individual images ($I_a$, $I_b$) are displaced relative to one another by a first displacement vector, and
- a second displacement vector is calculated by means of the displaced individual images ($I_a$, $I_b$).

**5.** Method according to claim 3 or 4, **characterized in that** the calculation of the respective displacement vector takes place in different resolution stages of the individual images ($I_a$, $I_b$), **in that**

- a first displacement vector is calculated in a first, low resolution stage of the individual images ($I_a$, $I_b$),
- the individual images ($I_a$, $I_b$) are displaced relative to one another in a second, higher resolution stage by the first displacement vector, and
- a second displacement vector is calculated by means of the displaced individual images ($I_a$, $I_b$) in the second resolution stage.

**6.** Method according to any one of claims 1 to 5, **characterized in that** a pixel window (W) is only characterized as feature if a minimum distance from the already determined features is exceeded.

**7.** Method according to any one of claims 1 to 6, **characterized in that** the transformation matrix has precisely eight degrees of freedom and characterizes a projective transformation.

**8.** Method according to any one of claims 1 to 7, **characterized in that** the calculation of the transformation matrix takes place in such a way that for a repetition count

- a first part quantity of the features is in each case selected,
- a test transformation matrix belonging to this part quantity is calculated,
- the number of features of a second part quantity is determined for the respective test transformation matrix as the quality value and these features are imaged by the test transformation matrix with a defined accuracy,
- the test transformation matrix with the highest number is selected, and
- the transformation matrix is calculated from the associated features, which is imageable with the defined accuracy.

**9.** Method according to any one of claims 1 to 8, **characterized in that** the individual images ($I_a$, $I_b$) are joined in a planar projection face, wherein, in particular, the individual image ($I_b$) which is later in terms of time during joining is superimposed on the individual image ($I_a$) that is earlier in terms of time.

**10.** Method according to any one of claims 1 to 14, **characterized in that** the individual images ($I_a$, $I_b$) are rectified before the determination of the features.

**11.** Method according to any one of claims 1 to 10, **characterized in that** a highlight mask is set up for each individual image ($I_a$, $I_b$), **in that** pixel values ($p_a(x, y)$, $p_b(x, y)$) are detected, which exceed a highlight threshold value and no features are permitted for the calculation of the transformation matrix in the highlight masks.

**12.** Device for joining a plurality of digital images to form a total image with

- an input unit (12) for providing a first individual digital image ($I_a$) and a second individual digital image ($I_b$) overlapping the latter,
- a selection unit (15) to determine a plurality of features of the first individual image ($I_a$), which is configured in such a way that the features are each allocated first feature coordinates,
- a tracking unit (16) to determine the features in the second individual image ($I_b$), which is configured in such a way that the features are each allocated second feature coordinates,
- a transformation unit (17) to determine a transformation matrix having at least six degrees of freedom between the individual images ($I_a$, $I_b$), which is configured in such a way that

-- a first part quantity of the features is selected,
-- a test transformation matrix is calculated from the first and second feature coordinates of this part quantity,
-- a quality value is determined for the test transformation matrix with a second part quantity of the features, and
-- the transformation matrix is determined proceeding from the test transformation matrix if the quality value satisfies a quality criterion, and

- an output unit to join the individual images to form a total image by means of the transformation matrix,

**characterized in that**

the transformation unit (17) is designed such that the feature coordinates are normalized before the calculation of the transformation matrix and the normalization takes place in such a way that the feature coordinates belonging to an individual image ($I_a$, $I_b$) each have an average distance of $\sqrt{2}$ from a focal point calculated from these feature coordinates.

13. Device according to claim 12, **characterized in that** a rectifying unit (13) is provided to rectify the individual images ($I_a$, $I_b$).

14. Device according to claim 12 or 13, **characterized in that** a highlight unit (14) is provided to determine highlight masks of the individual images ($I_a$, $I_b$).

15. Endoscope system with

  - an imaging sensor (9) arranged on a shaft (2) to record individual digital images ($I_a$, $I_b$) and
  - a device (11) for joining a plurality of individual digital images ($I_a$, $I_b$) to form a total image (G) according to any one of claims 12 to 14.

**Revendications**

1. Procédé d'assemblage de plusieurs images individuelles numériques en une image d'ensemble, comportant les étapes de :

  - préparation d'une première image individuelle numérique ($I_a$) et d'une seconde image individuelle numérique ($I_b$) se chevauchant avec cette première image,
  - détermination de plusieurs caractéristiques de la première image individuelle ($I_a$), des premières coordonnées de caractéristique étant attribuées à chacune des caractéristiques,
  - détermination des caractéristiques dans la seconde image individuelle ($I_b$), des secondes coordonnées de caractéristique étant attribuées à chacune des caractéristiques,
  - détermination d'une matrice de transformation, comprenant au moins six degrés de liberté, entre les images individuelles ($I_a$, $I_b$) par le fait que

    -- un premier sous-ensemble des caractéristiques est sélectionné,
    -- à partir des premières et secondes coordonnées de caractéristique de ce sous-ensemble est calculée une matrice de transformation de test,
    -- une valeur de qualité est établie pour la matrice de transformation de test avec un second sous-ensemble des caractéristiques, et
    -- la matrice de transformation est établie à partir de la matrice de transformation de test lorsque la valeur de qualité satisfait un critère de qualité, et

  - assemblage des images individuelles ($I_a$, $I_b$) en une image d'ensemble (G) au moyen de la matrice de transformation,

  **caractérisé en ce que**
  les coordonnées des caractéristiques sont normalisées avant le calcul de la matrice de transformation et la normalisation est effectuée de manière telle que les coordonnées des caractéristiques associées à une image individuelle ($I_a$, $I_b$) aient toutes une distance moyenne de $\sqrt{2}$ à un barycentre calculé à partir de ces coordonnées des caractéristiques.

2. Procédé selon la revendication 1, **caractérisé en ce que** les coordonnées des caractéristiques sont établies itérativement dans différents niveaux de résolution des images individuelles ($I_a$, $I_b$).

3. Procédé selon la revendication 1 ou 2, **caractérisé en ce que** les caractéristiques de la première image individuelle ($I_a$) sont déterminées par le fait que, respectivement

  - une fenêtre de pixels (W) est formée à partir de plusieurs pixels voisins,

- une matrice est formée à partir des gradients (g) à ces pixels,
- les valeurs propres de la matrice sont calculées,
- la fenêtre de pixels (W) est spécifiée comme caractéristique lorsque les valeurs propres dépassent une valeur seuil, et
- des premières coordonnées de caractéristique sont attribuées à la caractéristique et les caractéristiques sont déterminées dans la seconde image individuelle ($I_b$) par le fait que, respectivement
- pour la caractéristique est formé un vecteur d'erreur en fonction des gradients et des différences des valeurs de pixel ($p_a(x, y)$, $p_b(x, y)$) des images individuelles ($I_a$, $I_b$) dans la fenêtre de pixels (W),
- un vecteur de décalage est calculé à partir du vecteur d'erreur et de la matrice, et
- des secondes coordonnées de caractéristique sont attribuées à la caractéristique.

4. Procédé selon la revendication 3, **caractérisé en ce que** le calcul du vecteur de décalage correspondant est effectué itérativement par le fait que

- les images individuelles ($I_a$, $I_b$) sont décalées l'une par rapport à l'autre d'un premier vecteur de décalage, et
- un second vecteur de décalage est calculé au moyen des images individuelles ($I_a$, $I_b$) décalées.

5. Procédé selon la revendication 3 ou 4, **caractérisé en ce que** le calcul du vecteur de décalage correspondant est effectué dans différents niveaux de résolution des images individuelles ($I_a$, $I_b$) par le fait que

- un premier vecteur de décalage est calculé dans un premier niveau de résolution bas des images individuelles ($I_a$, $I_b$),
- les images individuelles ($I_a$, $I_b$) dans un second niveau de résolution plus élevé sont décalées l'une par rapport à l'autre du premier vecteur de décalage, et
- un second vecteur de décalage est calculé au moyen des images individuelles ($I_a$, $I_b$) décalées dans le second niveau de résolution.

6. Procédé selon l'une quelconque des revendications 1 à 5, **caractérisé en ce qu'**une fenêtre de pixels (W) est spécifiée comme caractéristique lorsqu'une distance minimale aux caractéristiques déjà déterminées est dépassée.

7. Procédé selon l'une quelconque des revendications 1 à 6, **caractérisé en ce que** la matrice de transformation comprend exactement huit degrés de liberté et spécifie une transformation projective.

8. Procédé selon l'une quelconque des revendications précédentes 1 à 7, **caractérisé en ce que** le calcul de la matrice de transformation est effectué de manière telle que, pour un nombre de répétitions

- un premier sous-ensemble des caractéristiques est sélectionné à chaque fois,
- une matrice de transformation de test associée à ce sous-ensemble est calculée,
- le nombre des caractéristiques, qui sont reproduites par la matrice de transformation de test avec une précision définie, d'un second sous-ensemble est établi pour ladite matrice de transformation de test en tant que valeur de qualité,
- la matrice de transformation de test ayant le nombre le plus élevé est sélectionnée, et
- la matrice de transformation est calculée à partir des caractéristiques associées qui peuvent être reproduites avec la précision définie.

9. Procédé selon l'une quelconque des revendications 1 à 8, **caractérisé en ce que** les images individuelles ($I_a$, $I_b$) sont assemblées sur une surface de projection planaire, en particulier l'image individuelle ($I_b$) temporellement ultérieure étant superposée lors de l'assemblage à l'image individuelle ($I_a$) temporellement antérieure.

10. Procédé selon l'une quelconque des revendications 1 à 9, **caractérisé en ce que** les images individuelles ($I_a$, $I_b$) sont corrigées avant la détermination des caractéristiques.

11. Procédé selon l'une quelconque des revendications 1 à 10, **caractérisé en ce qu'**un masque de lumière de brillance est créé pour chaque image individuelle ($I_a$, $I_b$) par le fait que sont détectées des valeurs de pixel ($p_a(x, y)$, $p_b(x, y)$) qui dépassent une valeur seuil de lumière de brillance et qu'aucune caractéristique pour le calcul de la matrice de transformation n'est autorisée dans les masques de lumière de brillance.

12. Dispositif d'assemblage de plusieurs images individuelles numériques en une image d'ensemble avec

- une unité d'entrée (12) pour la préparation d'une première image individuelle numérique ($I_a$) et d'une seconde image individuelle numérique ($I_b$) se chevauchant avec celle-ci,
- une unité de sélection (15) pour la détermination de plusieurs caractéristiques de la première image individuelle ($I_a$), qui est conçue de manière telle que des premières coordonnées de caractéristique soient attribuées à chacune des caractéristiques,
- une unité de suivi (16) pour la détermination des caractéristiques dans la seconde image individuelle ($I_b$), qui est conçue de manière telle que des secondes coordonnées de caractéristique soient attribuées à chacune des caractéristiques,
- une unité de transformation (17) pour la détermination d'une matrice de transformation, comprenant au moins six degrés de liberté, entre les images individuelles ($I_a$, $I_b$), qui est conçue de manière telle que

-- un premier sous-ensemble des caractéristiques soit sélectionné,
-- à partir des premières et secondes coordonnées de caractéristique de ce sous-ensemble soit calculée une matrice de transformation de test,
-- une valeur de qualité soit établie pour la matrice de transformation de test avec un second sous-ensemble des caractéristiques, et
-- la matrice de transformation soit établie à partir de la matrice de transformation de test lorsque la valeur de qualité satisfait un critère de qualité, et

- une unité de sortie (18) pour l'assemblage des images individuelles ($I_a$, $I_b$) en une image individuelle (G) au moyen de la matrice de transformation,

**caractérisé en ce que**
l'unité de transformation (17) est conçue de manière telle que les coordonnées de caractéristique soient normalisées avant le calcul de la matrice de transformation et la normalisation soit effectuée de manière telle que les coordonnées des caractéristiques associées à une image individuelle ($I_a$, $I_b$) aient toutes une distance moyenne de $\sqrt{2}$ à un barycentre calculé à partir de ces coordonnées des caractéristiques.

13. Dispositif selon la revendication 12, **caractérisé en ce qu'**il est prévu une unité de correction (13) pour la correction des images individuelles ($I_a$, $I_b$).

14. Dispositif selon la revendication 12 ou 13, **caractérisé en ce qu'**il est prévu une unité de lumière de brillance (14) pour la détermination de masques de lumière de brillance des images individuelles ($I_a$, $I_b$).

15. Système d'endoscopie avec

- un capteur (9) donneur d'image, disposé sur un arbre (2), pour la réalisation d'images individuelles numériques ($I_a$, $I_b$) et
- un dispositif (11) pour l'assemblage de plusieurs images individuelles numériques ($I_a$, $I_b$) en une image d'ensemble (G) selon l'une quelconque des revendications 12 à 14.

Fig. 1

Fig. 2

Fig. 3

EP 2 471 040 B1

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON KONEN et al.** Real-Time Image Mosaic for Endoscopic Video Sequences. *Bildverarbeitung für die Medizin,* 2007
- **VON ALEXANDER BEHRENS.** Creating Panoramic Images for Bladder Fluorescence Endoscopy. *Acta Polytechnica,* 2008, vol. 48 (3
- **VON GEORGE WOLBERG et al.** Image Registration Using Log-Polar Mappings for Recovery of Large-Scale Similarity and Projective Transformations. *IEEE Transactions on Image Processing,* 2005, vol. 14 (10
- **VON CARLO TOMASI ; TAKEO KANADE.** Detection and Tracking of Point Features. *Technical Report CMU-CS-91-132,* 1991
- **VON JOHN MALLON ; PAUL F. WHELAN.** Precise Radial Un-distortion of Images. *Proceedings of 17th International Conference on Pattern Recognition,* 2004